# EUROPEAN PATENT APPLICATION

(11) **EP 4 832 401 A1**
(43) Date of publication of application: **28.10.2026**
(21) Application number: 25171803.7
(22) Date of filing: 22.04.2025
(51) Int. Cl.: H04L 5/00, H04W 24/10, H04W 72/541, G01S 7/00, G01S 7/02

(54) **A METHOD OF DETERMINING INTERFERENCE IN A CELLULAR NETWORK**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of determining interference in a cellular network is provided. The interference is experienced within a first cell comprising a first base station configured to exchange data signals with a first UE during a plurality of radio resource blocks. The interference is caused by a second cell comprising a second base station. The second base station is an Integrated Sensing and Communication, ISAC, base station. The method comprises allocating a first radio resource block for measuring the interference. The method further comprises receiving, within the first cell, during the first radio resource block, a first received signal comprising a predefined sensing signal transmitted from the second cell. The first received signal further comprises a channel impulse response. The method further comprises determining the channel impulse response based on the first received signal and the predefined sensing signal.

## Description

### Field of the invention

The present invention relates to methods of determining interference caused by a neighbouring cell. In particular, the invention relates to determining interference caused by sensing signals communicated by an Integrated Sensing and Communication (ISAC) system of the neighbouring cell.

### Glossary

ISAC - Integrated Sensing and Communication
MIMO - Multiple-Input Multiple-Output
Al - Artificial Intelligence
SIC - Successive Interference Cancellation
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Advanced telecommunications networks may integrate both sensing and communications technologies. Such networks may transmit and receive both signals for sensing and signals for communication from the same base station. For sensing, the network may utilise radar-like signals for the purpose of detecting and tracking nearby objects, for example. For communications, the network may utilise a known communications system, such as a cellular communications system.

Transmission and receipt of signals in networks is typically multiplexed. For example, there may be a series of timeslots available for communication of signals. Each timeslot may then be used to communicate a different signal. For example, a first timeslot may be used to communicate a sensing signal. A second timeslot may be used to transmit a data signal (also referred to as a "communications signal"). A third timeslot may be used to transmit a different data signal. A fourth timeslot may be used to receive a data signal, and so on. Additionally or alternatively, multiplexing may be performed in the frequency domain. A general time and/or frequency slot may be referred to as a radio resource allocation.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; Al model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

To improve flexibility and radio resource usage efficiency, frequency bands may be further divided into sub-bands (component carriers).

In a conventional TDD scheme, time frames are designated as uplink or downlink time frames. To reduce latency, a radio resource block in a downlink time frame may be used for uplink. As a result, time-critical uplink communications may be communicated more promptly, rather than being delayed until the next available uplink time frame. To standardise this behaviour, sub-band full-duplex (SBFD) was introduced to 3GPP RAN in release 18 as a study item and a working item in release 19. SBFD enables the base station to perform transmit and receive operations in the same time frame, using non-overlapping frequency resources (sub-bands).

It is envisaged that ISAC and SBFD may be integrated at the same base station (for example, in 6G 3GPP Releases).

Signals communicated between a base station and UE may experience interference from signals communicated by a neighbouring base station. These interfering signals may be on the same frequency sub-band or an adjacent frequency sub-band. This may be referred to as "cross-link interference" (CLI).

A common source of cross link interference is downlink signals interfering with uplink signals of a neighbouring base station. One reason for this is that downlink signals have a relatively high transmit power compared to uplink signals.

One conventional CLI mitigation method involves uniform power reduction of downlink signals, which improves UL but reduces DL throughput.

Nevertheless, another possible source of cross link interference is sensing signals from a neighbouring ISAC base station interfering with data signals communicated by a base station. Uplink signals are particularly susceptible to interference as they have a relatively low transmit power, compared to sensing signals.

Another approach for CLI mitigation involves adding guard bands, which reduce interference but waste spectrum. A further approach involves coordinated scheduling, which requires complex network management.

### Summary

Against this background, there is a need to determine CLI caused within a cell by a neighbouring ISAC system.

Accordingly, a method of determining interference in a cellular network is provided. The interference is experienced within a first cell comprising a first base station configured to exchange data signals with a first UE during a plurality of radio resource blocks. The interference is caused by a second cell comprising a second base station. The second base station is an Integrated Sensing and Communication, ISAC, base station. The method comprises allocating a first radio resource block for measuring the interference. The method further comprises receiving, within the first cell, during the first radio resource block, a first received signal comprising a predefined sensing signal transmitted from the second cell. The first received signal further comprises a channel impulse response. The method further comprises determining the channel impulse response based on the first received signal and the predefined sensing signal.

The method may further comprise determining the predefined sensing signal (e.g., before the first received signal is received). In this way, the base station and/or UE of the first cell knows the predefined sensing signal that has been transmitted by the second cell. Preferably, the receiving entity within the first cell already knows the predefined sensing signal at the time the first received signal (i.e. the interfering signal) is received within the first cell. The base station and/or UE may therefore determine the channel impulse response based on the predefined sensing signal transmitted from the second cell and the signal received within the first cell.

Determining may comprise receiving advance notice of the predefined sensing signal from the second cell causing the interference, or determining the predefined sensing signal based on communications standards.

The neighbouring ISAC system may identify radio resource blocks that are subject to interference with the first cell and allocate these radio resource blocks for communicating sensing signals, instead of data signals. Sensing signals generally create less interference for neighbouring cells because they are transmitted at a lower power and have a higher antenna tilt. By allocating these radio resource blocks for communicating sensing signals the neighbouring ISAC system may reduce the interference experienced within the first cell, while maintaining communication capabilities of both cells. Moreover, since reflected sensing signals received at the ISAC base station may be analysed using correlation techniques, these signals may be effective even when the SNR is not high and so are less susceptible to interference. These signals are therefore suitable for use in radio resource block that are identified as having interference with the first cell.

The method may further comprise communicating, between the first base station and the second base station, an indication that the first radio resource block is allocated for determining interference.

The first cell my inform the second cell which radio resource block is allocated for measuring the interference (the "reserved" radio resource block), so that the second cell can ensure the interfering sensing signal is transmitted during a radio resource block that is concurrent in time with the reserved radio resource block.

Receiving the first received signal within the first cell may comprise receiving the first received signal at the first base station or the first UE.

Where the effect of the sensing signal on uplink communications is to be determined, the interference may be measured at the base station. Where the effect of the sensing signal on downlink communications is to be determined, the interference may be measured at the UE.

Receiving the first received signal "within the first cell" may comprise receiving the first received signal at a receiving entity in the first cell, which may be the first base station or the first UE.

The second base station may be configured to exchange data signals with a second UE. The second UE may be served by the second base station.

The predefined sensing signal received from the second cell may be received from the second base station or the second UE. In other words, the predefined sensing signal may be transmitted by the second base station or the second UE.

The channel impulse response may be associated with a radio channel between a transmitting entity of the predefined sensing signal in the second cell and a receiving entity of the first received signal in the first cell.

The first received signal may may be transmitted by the transmitting entity. The first received signal may may be received by the receiving entity.

The transmitting entity may be the second base station or a UE in the second cell (served by the second base station). The receiving entity may be the first base station or the first UE.

The first base station and the second base station may be neighbouring base stations. The first cell and the second cell may be neighbouring cells.

The first UE may be served by the first base station. The second UE may be served by the second base station.

The first base station and the first UE may be configured to not exchange data signals during the first radio resource block.

The method may further comprise identifying one or more radio resource blocks that are subject to interference with the neighbouring cell.

The first radio resource block may have a first frequency range. The predefined sensing signal may be transmitted from the second cell via a radio resource block having a second frequency range different to the first frequency range.

In other words, the first radio resource block may have a center frequency that is different to a center frequency of a radio resource block via which the sensing signal is transmitted from the second cell.

Alternatively, the predefined sensing signal may be transmitted from the second cell via a radio resource block having a second frequency range (and/or center frequency) that is the same as the first frequency range.

A frequency band available to the first base station may be divided into a plurality of frequency sub-bands. Each radio resource block may have a corresponding frequency sub-band. The first frequency range may correspond to a first frequency sub-band.

A frequency band available to the second base station may be divided into a plurality of frequency sub-bands. The predefined sensing signal may be transmitted from the second cell via a second frequency sub-band adjacent to the first frequency sub-band.

The first cell and/or the second cell may be operating a sub-band non-overlapping Full Duplex, SBFD, scheme.

In some examples, both the first cell and the second cell may be operating as SBFD. However, if one or both of the cells are not operating as SBFD, the first cell can still measure the interference due to the sensing signal from the second cell.

If both the first cell and the neighbouring ISAC second cell are operating as SBFD cells, interference may be caused between adjacent sub-bands of the ISAC second cell and the first cell. Generally, interference between adjacent frequency sub-bands is more likely to present an issue than interference within the same frequency sub-band. This is because measures already exist to reduce the impact of interference on the same frequency sub-band. For example, scheduling and frequency allocation between cells. Nevertheless, where interference is experienced on the same sub band between neighbouring cells, the proposed methods may be used to quantify (and, in some examples, remove) the interference.

The sensing and data signals may be communicated during a plurality of time frames. The plurality of time frames and the plurality of frequency sub-bands may together provide the plurality of radio resource blocks, each radio resource block having a frequency sub-band and time frame.

The method may further comprise receiving, within the first cell, during a second radio resource block, a second received signal comprising a data signal transmitted within the first cell and an interfering signal, wherein the interfering signal comprises the predefined sensing signal transmitted from the second cell and the channel impulse response. The method may further comprise removing the interfering signal from the second received signal, based on the predefined sensing signal and the determined channel impulse response.

The second received signal may be received by the receiving entity within the first cell, which may be either the base station or the first UE. The data signal may be transmitted by the other entity in the first cell, either the base station or the first UE (i.e., if the base station is the receiving entity then the data signal may be an uplink data signal from the UE, and if the first UE is the receiving entity then the data signal may be a downlink data signal from the base station). The interfering signal may be received from (i.e., transmitted by) the transmitting entity in the second cell (which may be the second base station or the second UE).

The second radio resource block may have the same frequency range as the first radio resource block. In other words, the channel impulse response may be estimated by measuring the first received signal on a particular frequency band or sub band and the interference may be removed from a second received signal on the same frequency band or sub-band.

The data signal may be isolated from the interfering signal, based on the prior knowledge of the interfering signal obtained from the first radio resource block (i.e., the channel impulse response and the predefined sensing signal).

The method may further comprise removing the interfering signal from the second received signal received during the second radio resource block and optionally one or more further received signals during one or more further radio resource blocks (on the same frequency band or sub-band).

The method may further comprise reevaluating the channel impulse response. The method may further comprise removing an interfering signal from one or more subsequent received signals based on the predefined sensing signal and the reevaluated channel impulse response.

Reevaluating the channel impulse response may comprise allocating a third radio resource block for re-measuring the interference. Reevaluating the channel impulse response may further comprise receiving, within the first cell, during the third radio resource block, a third received signal comprising the predefined sensing signal transmitted from the second cell, wherein the received signal further comprises an evolved channel impulse response. Reevaluating the channel impulse response may further comprise determining the evolved channel impulse response based on the third received signal and the predefined sensing signal.

Removing an interfering signal from one or more subsequent received signals may comprise receiving, within the first cell (i.e., at the same receiving entity, which may be either the first base station BS or the first UE), during a fourth radio resource block, a fourth received signal comprising a data signal transmitted within the first cell (from the other entity) and an evolved interfering signal. The evolved interfering signal may comprise the predefined sensing signal transmitted from the second cell and the evolved channel impulse response. Removing the interfering signal from one or more subsequent received signals may further comprise removing the evolved interfering signal from the fourth received signal, based on the predefined sensing signal and the determined evolved channel impulse response.

The channel impulse response may be reevaluated periodically. Alternatively, the channel impulse response may be reevaluated in response to a determination that the channel has changed.

The method may further comprise determining that the channel has changed. Determining that the channel has changed may comprise measuring a SINR of the received signal and determining that the SINR has deteriorated. The SINR may deteriorate because the interfering signal is not removed as effectively (e.g., because the interfering signal has become stronger or because the channel has changed in another way). Determining that the channel has changed may additionally or alternatively comprise active channel monitoring.

Where the CLI is due to interference between base stations (i.e., the victim and aggressor are both base stations), the channel does not change frequently and therefore channel re-evaluation may be performed infrequently. However, where CLI is experiences or caused by a UE (i.e., one or both of the victim and aggressor are UEs), the channel changes more often and more frequent channel re-evaluation may be required.

A base station configured to perform any of the methods described above is also provided.

A computer program comprising instructions that, when executed by a processor, cause the processor to perform any of the methods described above is also provided.

There are several ways of applying SIC. In a first approach, the strongest received signal is decoded and then removed from the received signal to obtain the remaining signal.

If the strongest received signal is the transmitted data signal from the first base station or the first UE, it will be decoded then the remaining signal is the interference (the sensing signal from the second cell). The interference may then be removed from the whole received signal, then the isolated signal (the data signal component) will be saved.

If the strongest received signal is the interference caused by the sensing signal from the cell, it will be decoded then removed from the received signal in order to obtain the data signal, then the isolated signal (the data signal) will be saved.

In the proposed methods, SIC may be used to isolate the received data signal from the interfering sensing signal received from the second cell (e.g., from an ISAC BS).

In this context, "isolating" may refer to removing an interfering signal from a received signal comprising multiple components (not necessarily removing all interference from the signal).

Isolating the data signal from the received sensing signal may be based on the predefined sensing signal and the channel impulse response.

The interfering signal from the second cell (the predefined sensing signal) may be the same each time. In other examples, the second cell may occasionally change the sensing signal. The second base station in the second cell may inform the first base station in the first cell that the predefined sensing signal has changed (e.g., via a Xn interface).

The first received signal may be written as the product of the predefined sensing signal (*S*) transmitted by the second cell and the channel impulse response (h): $first received signal = \left(S h\right)$

The channel impulse response associated with the sensing signal transmitted from the second cell may be determined based on the first received signal (received during the first radio resource block) and the predefined sensing signal.

In some examples, the channel impulse response (h) may be determined via manipulation of the signals. $h = \left(S\right) / first received signal$

The second received signal may be represented as the sum of the data signal component and the interfering signal component. $second received signal = D + I$

The interfering component *I* may be written as the product of the predefined sensing signal transmitted by the second cell (*S*) and the channel impulse response (h) $I = \left(S h\right)$

The interfering signal component of the second received signal may be determined and removed from the second received signal based on the predefined sensing signal *S*. In some examples, this may be performed based on the channel impulse response determined form the first radio resource block.

In alternative examples, the interfering signal component of the second received signal may be determined via cross-correlation of the received signal with the predefined signal. In other examples, this may be performed via SIC.

The channel impulse response (h) may be calculated by dividing the interfering component by the predefined sensing signal: $h = I / S$

The channel impulse response may be used to remove the interfering component from signals received during subsequent radio resource blocks (subject to the same interference).

The data signal D may be calculated by subtracting the interfering signal from the second received signal: $D = second received signal - I$

The predefined sensing signal (S) may be precoded to produce the sensing signal transmitted by the second cell. The transmitted sensing signal may be transmitted via a multi-antenna system.

Isolating the first component of the received sensing signal and/or isolating the second component of the received sensing signal may comprise performing successive interference cancellation, SIC, on the received sensing signal.

The predefined sensing signal may be predefined in a communications standard.

The method may further comprise communicating an indication of the predefined sensing signal between the second base station and the first base station (e.g., via an Xn interface).

The method may further comprise allocating, by the first cell, an extended uplink radio resource block or a downlink radio resource block in a first time frame and having a first frequency sub-band. The method may further comprise allocating, by the second cell, a sensing radio resource block in the first time frame and having a second frequency sub-band adjacent to the first frequency sub-band.

The extended uplink radio resource block may be allocated for the first base station receiving an uplink communications signal from the first UE. Alternatively, the downlink radio resource block may be allocated for the first UE receiving a downlink communications signal from the first base station. The sensing radio resource block may be allocated for communicating a sensing signal by the second cell.

Advantageously, by the second cell allocating a sensing signal in the block adjacent to the block for the data signal of the first cell, the data signal may experience a lower level of interference from the second cell, compared to a scenario where the second cell allocates a downlink data signal.

Moreover, the data signal communicated between the first UE and the first base station may be isolated by removing the interference caused by the sensing signal communicated from the second cell in the adjacent block. Removal of interference may be performed more effectively and efficiently where the interference signal from the second cell in the adjacent block is a sensing signal (rather than a downlink data signal), because the sensing signal may be the same each time and may be known ahead of time.

The interference may be determined in a number of ways. In some examples, the interference may be measured in advance during a reserved (empty) resource block, with the sensing signal being communicated by the ISAC system in an adjacent block. Advantageously, the interference may be measured without complex calculation.

In other examples, the interference may be determined based on prior knowledge of the sensing signal (which is typically predetermined and only changes infrequently, if at all). Prior knowledge of the sensing signal may be used to determine the interference via a cross correlation of the received signal with the predefined sensing signal. This may require complex calculation, which may utilise processing and power resources. However, this may avoid the need for the above method, in which a reserved slot is allocated for determining interference. As a result, this method may use radio resources more efficiently.

In any case, the interference caused by the sensing signal communicated by the ISAC system in the adjacent block may be determined once and then this determined interference may be subtracted from each radio resource block adjacent to the sensing signal. Advantageously, because the sensing signal does not change (or changes infrequently) the interference to be removed can be re-used and does not need to be re-determined each time. This method may therefore improve efficiency in terms of radio resource usage, computational resource usage and/or power usage.

The interference may be re-determined periodically, to correct for any drift in the interference over time (e.g., transmission changes due to changes in temperature). Moreover, the interference may be redetermined if the sensing signal changes.

In some examples, the proposed methods for interference reduction may allow for smaller guard frequency bands (or no guard frequency bands at all), as compared to prior art methods.

In some examples, the first time frame may be designated as a downlink time frame.

The frequency sub-bands may be contiguous.

Adjacent frequency sub-bands may be separated by a guard frequency band. By separating the frequency sub-bands with a guard frequency band, the amplitude of interference may be reduced.

A guard frequency band may be a reserved portion of the frequency spectrum between allocated frequency sub-bands, in which no signals are communicated.

The first radio resource block for measuring the interference (also referred to as a "reserved" radio resource block) may be allocated by the first cell in a second time frame. The method may further comprise transmitting, by the second cell, the predefined sensing signal during a radio resource block in the second time frame. The radio resource block of the sensing signal may have a sub-frequency band adjacent to a sub-frequency band of the reserved radio resource block.

As described above, the receiving entity in the first cell may receive the first received signal during the reserved radio resource block. The first received signal may comprise a component caused by interference of the sensing signal. The receiving entity in the first cell may measure the component of the received signal caused by interference of the sensing signal.

The second time frame may be a preceding time frame earlier than the first time frame (temporally prior to the first time frame), so that the measured interference component is already available when removing the interference from the first radio resource block.

In other words, the method may comprise: in an earlier time frame, communicating a sensing signal by the second cell in a sub-frequency band adjacent to a reserved block of the first cell (a block that is not allocated for communicating sensing signals, transmitting DL data signals or receiving UL data signals); and measuring by the first cell (by the first base station and/or a UE served by the first base station) the received interference during the reserved block caused by the sensing signal communicated by the second cell in the adjacent block.

Alternatively, the second time frame may be later than the first time frame (temporally subsequent to the first time frame). The received signal during the first time frame may be stored and the interference may be removed from the received signal after the received interference during the second time frame has been measured.

This may be useful if the data signal within the first cell has already been received/scheduled at the time the first cell identifies that the channel condition has changed. The updated interference measurement may be obtained during a subsequent time frame, and the data signal may nevertheless be recovered.

Measuring the component of the received signal caused by interference of the sensing signal may comprise using prior knowledge of the predefined sensing signal transmitted by the second cell to isolate the component of the received signal caused by interference of the sensing signal.

Alternatively, interference from other sources may be assumed to be zero and measuring the component of the received signal caused by interference of the sensing signal may comprise measuring the received signal.

There may be one frequency sub-band designated for use during extended UL transmission or a plurality of sub-bands.

The method may further comprise receiving, at the first cell, a data signal during the extended uplink radio resource block or downlink radio resource block. The received data signal may comprise a first component received from the first UE (in the case of uplink) or from the first base station (in case of downlink) and a second component caused by interference of the sensing signal communicated during the sensing radio resource block. The method may further comprise removing the second component from the received data signal by subtracting the interference measured during the reserved block.

In other words, the value of interference measured during the reserved block may be subtracted from the data signal received. This may be an efficient way to remove interference from the downlink/extended UL block.

The method may further comprise, during one or more subsequent time frames, allocating, at the first cell, a downlink/extended uplink radio resource block in the subsequent time frame, allocating, at the second cell, a sensing radio resource block in the subsequent time frame in a sub-frequency band adjacent to a sub-frequency band of the extended uplink radio resource block, receiving, at the first cell, a data signal during the downlink/extended uplink radio resource block, and removing an interference component from the received data signal by subtracting the interference measured during the reserved block (as described above).

In other words, the value of interference measured once may be used for a plurality of subsequent downlink/extended uplink blocks.

The method may further comprise measuring the interference again and updating the value used to remove the interference from the received data signal.

The interference may be measured periodically (e.g., every X frames) or whenever a condition is met (e.g., a measure of channel condition changes or an error is detected in the signal, or the error rate exceeds a threshold).

In some examples, if a measure of channel condition indicates that the recovered signal will be corrupted to an extent that data transmission by BPSK is error prone or impossible, the first cell may measure the interference again.

This may be used to account for changes in channel conditions (e.g., due to changes in temperature).

A channel condition may be measured via one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

The system may be operating a sub-band non-overlapping Full Duplex, SBFD, scheme.

The SBFD scheme may be operated within a Time Division Duplex, TDD, carrier.

The first time frame (and the second time frame and each subsequent time frame) may be a downlink time frame of the TDD carrier.

The SBFD scheme may be operated within a single configured downlink, DL, and uplink, UL, bandwidth part, BWP, pair.

The DL and UL BWP pair may each have the same centre frequency.

### Brief description of the drawings

Fig. 1 shows an example telecommunications system.
Fig. 2 shows example radio resource allocation in TDD and SBFD operation.

### Detailed description

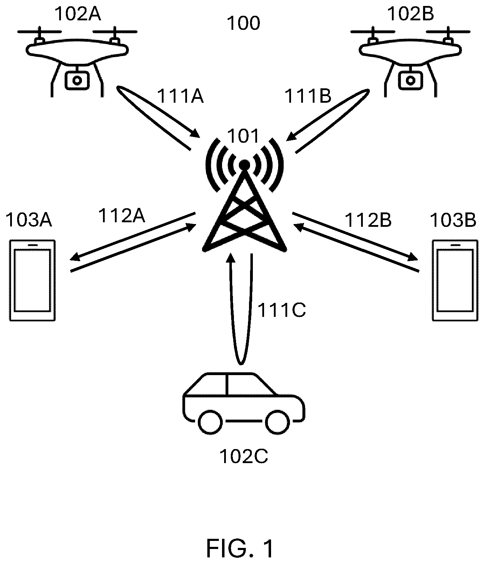

Fig. 1 shows an example telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and communications signals communicated along such channels may be received by any of the targets. For example, sensing signals communicated along channels 111A, 111B, and 111C may be received by UEs 103A or 103B. As such, if a sensing signal is sent along a sensing channel simultaneously with a communications signal along a communication channel, for example channel 112A, the receiving UE, for example UE 103A, may not be able to decode the communications signal due to interference from the sensing signal.

Time-domain multiplexing and/or frequency-domain multiplexing may be employed. For example, time axis may be divided into a sequence of time slots and/or the frequency axis may be divided into a sequence of frequency slots.

A transmitter may communicate signals in different directions via beamforming. Each beam may carry a different signal so that each beam is a separate radio resource allocation. Therefore, in some examples, each unique combination of timeslot, frequency and beam constitutes a different radio resource allocation, where all techniques are used (frequency multiplexing, time domain multiplexing, and beamforming). In other examples, one or two of these techniques may be used.

As described above, SBFD enables simultaneous transmit and receive operations at the base station, using non-overlapping frequency resources ("sub-bands"). Use of SBFD extends the duration over which UL transmission can occur, in order to improve UL coverage/capacity and latency performance.

In some examples, radio resource blocks in downlink time frames are used for extended uplink. Since the transmit power of uplink signals is generally lower than for equivalent downlink signals, these radio resource blocks are more susceptible to interference. In particular, a significant source of interference for these radio resource blocks may originate from neighbouring base stations transmitting downlink signals on neighbouring frequency bands.

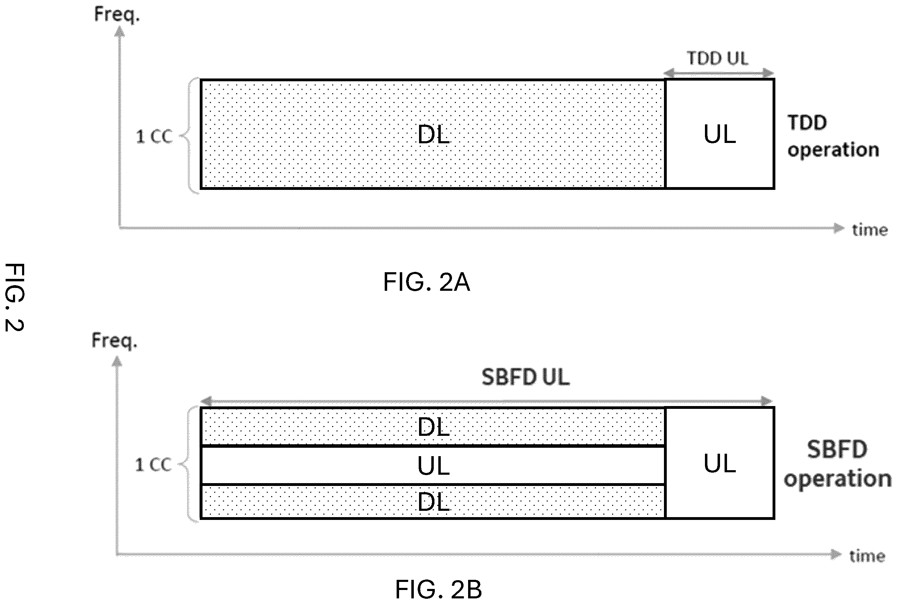

Fig. 2 illustrates how UL and DL radio resources are allocated in TDD time frames, compared to how radio resources may be allocated during SBFD operation. In Fig. 2A, standard TDD operation is illustrated, in which the radio resources are divided into DL and UL time frames. As can be seen in the SBFD operation of Fig. 2B, the DL time frame is divided into blocks by separating the frequency band (illustrated as 1 component carrier, CC) into sub-bands. One or more of the blocks may be allocated for UL, thus increasing the UL capacity.

A component carrier refers to an individual carrier frequency that can be combined with other carriers to create a wider bandwidth for data transmission. Whilst Fig. 2 illustrates that a component carrier may be divided into sub-bands, each of these sub-bands then forms an independent channel and so each sub-band may also be referred to as a component carrier.

ISAC and SBFD may both be enabled together (e.g., in 6G). Both can be integrated at the same BS.

It is an aim for mobile network operators to support ISAC and SBFD features while ensuring efficient use of spectrum resources, so that the new functionality may be added while fulfilling the requirements of existing customers. Therefore, adding ISAC sensing capabilities to base stations should not be disadvantageous for existing communication customers. To achieve this, efficient utilization of the available frequency spectrum is needed, so as not to waste limited frequency resources, and without creating interference to the data signals detrimental to the quality of service of communications services. It is a further goal of mobile network operators that the new sensing functionality is accurate and that a targeted object can be precisely detected.

Cross-link interference (CLI) between neighbouring base stations (BSs) remains a significant challenge. In a specific example, a BS transmitting in DL can interfere with the UL reception of an adjacent BS operating in an adjacent frequency band.

A new approach to mitigating this issue is proposed in this disclosure and involves leveraging Integrated Sensing and Communications (ISAC) technology. ISAC combines wireless communication and radar-like sensing within the same infrastructure. In this proposed solution, a BS with ISAC functionality is deployed alongside a neighbouring base station (e.g., a SBFD-enabled BS). The ISAC system allocates ISAC sensing signals during downlink transmission time frames for frequencies adjacent to UL frequencies of the neighbouring base station. Since ISAC sensing signals typically operate at lower power and higher antenna tilt, they naturally reduce CLI while maintaining communication capabilities.

Integrating SBFD with ISAC provides advantageous features from each scheme to the same BS. This may increase the flexibility and the available spectrum use but also increases the complexity. The proposed methods aim to integrate the sensing functionality associated with ISAC and the extended UL coverage and lower latency from SBFD, while also solving some of the problems described above. The proposed methods also aim to integrate these features together, without impacting the performance of each other and while using the available radio spectrum efficiently.

In a specific example, the ISAC system transmits a sensing signal during the same time frame as the neighbouring base station receiving the extended UL SBFD transmission from a UE.

The sub-band allocated by the neighbouring base station for SBFD extended uplink is adjacent to the sub-band allocated for sensing by the ISAC system.

The received signal comprises the SBFD UL signal and the interference from the sensing signal.

The sensing signals are usually constant signals. In other words, the predefined sensing signal transmitted from the ISAC cell is generally the same each time. This will lead to almost a constant interference value, as long as the channel conditions remain the same.

In order to remove the interference from the received signal and isolate the data signal, the interfering sensing signal may be subtracted from the received signal.

The interfering sensing signal can be determined separately. In one example, the interfering sensing signal may be received when there is no SBFD data signal exchanged between the UE and the base station (in a reserved radio resource block).

In another example, the interfering sensing signal can be predetermined by isolating the interfering signal from a received signal that comprises the interfering component and a data signal component. The interfering signal may be isolated based on prior knowledge of the predetermined sensing signal.

The value of the determined interfering sensing signal may be stored. Then, it may be used during the interference suppression stage when a signal is received.

The proposed methods may be applied for reducing and removing interference for a system comprising ISAC and SBFD. Interference caused by ISAC sensing signals from a neighbouring base station may be measured and suppressed, while enabling a SBFD extended UL transmission period. This may extend UL coverage and reduce latency.

By providing methods for reducing and removing interference from the received UL signals during the extended UL radio resource allocation, lower guard bands between DL and UL signals may be needed. The implementation complexity may also be decreased (e.g., a smaller antenna array size is required, components used in SBFD to cancel self-interference at the BS may be reduced).

Cross-Link Interference in SBFD networks is experienced in a number of different scenarios. Two important example scenarios are described separately below.

In DL-to-UL interference, the high-power DL signal from BS1 interferes with the UL reception at BS2 in an adjacent frequency sub-band. This is a dominant CLI issue, due to the significant power difference between BS DL transmissions and UE UL transmissions.

In UL-to-DL Interference, the extended UL transmission from UE2 connected to BS2 can interfere with DL reception of UE1 at BS1 during a DL time slot. This interference is usually weaker than DL-to-UL but still impacts performance. The level of interference may vary depending on the position of the UEs within the cells. For example, the interference may be stronger if UE2 and UE1 are in close proximity to each and relatively far from BS1 (e.g., at a cell boundary). Such scenarios may be addressed by dynamic scheduling to allocate radio resource blocks to these UEs that are not subject to such high levels of interference.

These are two important examples but are not the only cases where CLI can occur. For example, UL-to-UL and DL-to-DL interference scenarios also exist.

Conventionally, CLI mitigation methods include: uniform DL power reduction, which improves UL but reduces DL throughput; guard bands, which reduce interference but waste spectrum; and coordinated scheduling, which requires complex network management.

### Reducing CLI

Methods are proposed to reduce CLI between first and second neighbouring cells by allocating sensing signals to particular radio resource blocks at the ISAC BS in the second cell and thereby dynamically control CLI, without sacrificing network performance. One, both, or neither of the cells may be operating as SBFD. The second cell is an ISAC cell. The first cell may be an ISAC cell or may not be an ISAC cell.

A number of examples are described below to illustrate the proposed methods. These examples assume that SBFD is used by one or both of the first and second cells. However, as discussed above, the proposed methods are equally applicable where the first and second base stations in the first and second cells are conventional TDD base stations (and at least the second base station is an ISAC base station).

In a first example, the first cell operates in a SBFD mode. The second cell includes an ISAC-enabled SBFD base station, where one or more radio resource blocks in one or more frequency sub-bands in a DL time frame are allocated for communicating ISAC sensing signals, rather than DL data signals. The first cell allocates one or more radio resource blocks in one or more frequency sub-bands in the DL time frame for communicating UL data signals. The second cell allocates the ISAC sensing signals in radio resource blocks that are adjacent to the radio resource blocks of the UL data signals of the first cell (i.e., the radio resource blocks are in the same time frame and in an adjacent frequency sub-band).

In a second example, the first cell operates in a SBFD mode. The second cell comprises a purely ISAC-enabled BS, transmitting sensing signals while assisting with UL reception.

The second cell may use ISAC Sensing Signals as low-power signals during a DL time period. Instead of transmitting high-power DL signals near the UL band of the neighbouring BS, the ISAC-enabled BS of the second cell transmits sensing signals. The sensing signals may have a lower power than standard DL data signals. Therefore, they may generate less interference in the adjacent UL band. The sensing signals may be directionally tilted upwards (e.g., to detect drones). Therefore, they may introduce less interference to ground UEs.

In some scenarios, the second cell (ISAC cell) may experience interference from the first cell (or each cell experiences mutual interference from the other). Radio resource blocks that experience significant interference may be allocated as sensing blocks, which are more robust and less affected by interference. If sensing signals are transmitted by the second cell during one or more radio resource blocks in a DL time period, UEs served by the second cell are not receiving DL signals during those radio resource blocks. Therefore, there will be no CLI from the first cell (e.g., SBFD UE UL) affecting the data signals in the second cell (e.g., ISAC UE DL) during that radio resource block (because the block is allocated for sensing instead).

CLI from data signals within the first cell operating as a SBFD cell (i.e. DL signals from the SBFD BS or UL signals from the SBFD UE) may have a relatively low impact on sensing signals communicated by the second cell, compared to CLI from SBFD cell to data signals communicated by a legacy TDD BS. The received signal at the ISAC BS (second cell) during the sensing radio resource block will be a mixture of the reflected sensing signal from an object of interest and the CLI from the neighbouring SBFD first cell. The second cell (e.g., ISAC BS in the second cell) may cross-correlated/auto-correlate the received signal with the transmitted sensing signal, which will result in a sharp peak signal indicating receiving the sensing signal. Unlike a legacy TDD BS receiving an UL data signal, the ISAC BS is not expecting the received sensing signal to be decoded. Therefore, the sensing signal is more robust to CLI.

In a further example, the second cell may perform frequency-selective DL transmission. The ISAC BS in the second cell may dynamically allocate transmission of DL data signals to radio resource blocks having center frequencies further away from center frequencies of radio resource blocks used by neighbouring cells for receipt of UL data signals. The ISAC BS may further dynamically replace DL data signals with ISAC sensing signals in radio resource blocks that are subject to interference with data signals communicated by neighbouring cells, such as the first cell. In other words, allocate sensing signals to radio resource blocks that have center frequencies close to center frequencies of radio resource blocks of neighbouring cells (particularly if those radio resource blocks are used by the neighbouring cells for UL data signals). In this way, the base stations are able to maintain full-spectrum utilization, without the need for guard bands.

In some examples, spectrum usage and resource allocation may be further enhanced via coordination between the first and second cells. The first cell (e.g., SBFD BS in the first cell) can coordinate with the second cell (e.g., ISAC-enabled BS in the second cell) to exchange real-time interference data and/or allocation data. If UL SINR degrades, the second cell may dynamically reduce sensing signal power to further minimize CLI.

Where the first cell and the second cell are both ISAC cells, the cells may coordinate allocation of sensing radio resource blocks to use the spectrum efficiently. For example, where radio resource blocks at the first cell and the second cell are subject to mutual interference, one or other of the cell may allocate their respective block as a sensing block. However, it may be inefficient for both cells to allocate these blocks as sensing blocks. Therefore, by coordinating between the cells, one cell may allocate their respective block as a sensing block, while the other cell allocates their respective block as a data block (downlink or extended uplink).

Where there are a plurality of pairs of mutually interfering blocks, the cells may coordinate to allow each cell to allocate a sufficient number of blocks as data blocks (downlink or extended UL blocks).

### Measuring and removing CLI

Measurement of CLI in a first cell may be performed by allocating a reserved radio resource block so that communications signals will not be exchanged within the first cell during the reserved radio resource block. Therefore, the received signal level will be the CLI caused by the aggressor in the second cell. This allows the potential victim in the first cell to measure/estimate CLI level.

This technique may be used for scheduling. If the CLI level is high, the potential victim may use different radio resources.

However, it may not always be possible/efficient to simply use different resources when CLI is present. For example, in high load cells there may be many UEs and using unimpacted radio resources may not be always possible. Therefore, it is desirable to mitigate CLI and maintain a good network performance especially in high load scenario.

Approached already exist to handle interference caused by neighbouring cells using the same radio resources. However, CLI caused by neighbouring cells using adjacent radio resources may be more difficult to prevent.

Even though CLI may be reduced via the methods proposed above (via allocating of sensing signals), it may nevertheless be desirable to provide methods to remove the CLI caused by the sensing signal communicated by the second cell from the signal received during the impacted radio resources.

One way to remove the CLI is to measure the CLI in the absence of a received data signal. Then, when both a data signal and CLI signal are present in a different block, the CLI may be removed from the received signal by subtracting the measured CLI.

Measurement of the CLI may be performed by transmitting the sensing signal from the aggressor (could be BS or UE). The potential victim (BS or UE) will reserve the block so will not be expecting to receive normal communications. Therefore, the received signal level will be the CLI caused by the aggressor. This allows the potential victim to measure/estimate CLI level.

A combination of SBFD and ISAC BS deployments may be used to remove CLI from a received signal. This solution may be applied when the aggressor is transmitting the sensing signal (e.g., the ISAC BS).

In a specific example, one BS operates in a SBFD mode (nevertheless, this could also be a legacy TDD BS). The second BS is either:
An ISAC-enabled SBFD BS, where some DL frequencies are replaced with ISAC sensing signals.
A purely ISAC-enabled BS, transmitting sensing signals while assisting with UL reception.

The method may comprise estimating a wireless channel (a channel impulse response) between aggressor and potential victim (BS or UE). After measuring/estimating the interference, the victim may estimate the wireless channel based on knowledge of the predefined sensing signal.

Based on the estimation of the wireless channel, the victim may apply successive interference cancellation (SIC) to remove CLI. One or more of the following steps may be used in some examples:
The received signal at the victim side is *C + CLI = C +* (*S h*)
The victim (UE or BS) will receive the normal communication signal *C* and the *CLI.*
The CLI consists of the sensing signal multiplied by the wireless channel (*S h).*
The victim will be informed of the predefined sensing signal *S* (the sensing signal does not change or only changes infrequently).

The victim also knows the wireless channel h, as described above.

By applying SIC, the victim can remove the CLI from the received signal.

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific network in some examples, (such as a 6G or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.
In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of determining interference in a cellular network, wherein the interference is experienced within a first cell comprising a first base station configured to exchange data signals with a first UE during a plurality of radio resource blocks, wherein the interference is caused by a second cell comprising a second base station, wherein the second base station is an Integrated Sensing and Communication, ISAC, base station, the method comprising:
allocating a first radio resource block for measuring the interference;
receiving, within the first cell, during the first radio resource block, a first received signal comprising a predefined sensing signal transmitted from the second cell, wherein the first received signal further comprises a channel impulse response; and
determining the channel impulse response based on the first received signal and the predefined sensing signal.

2. The method of claim 1, further comprising communicating, between the first base station and the second base station, an indication that the first radio resource block is allocated for determining interference.

3. The method of claim 1 or claim 2, wherein receiving the first received signal within the first cell comprises receiving the first received signal at the first base station or the first UE.

4. The method of any preceding claim, wherein the second base station is configured to exchange data signals with a second UE.

5. The method of claim 4, wherein the predefined sensing signal received from the second cell is received from the second base station or the second UE.

6. The method of any preceding claim, wherein the channel impulse response is associated with a radio channel between a transmitting entity of the predefined sensing signal in the second cell and a receiving entity of the first received signal in the first cell.

7. The method of any preceding claim, wherein the first base station and the second base station are neighbouring base stations.

8. The method of any preceding claim, wherein the first base station and the first UE are configured to not exchange data signals during the first radio resource block.

9. The method of any preceding claim, wherein the first radio resource block has a first frequency range and wherein the predefined sensing signal is transmitted from the second cell via a radio resource block having a second frequency range different to the first frequency range.

10. The method of claim 9,
wherein a frequency band available to the first base station is divided into a plurality of frequency sub-bands, wherein each radio resource block has a corresponding frequency sub-band, wherein the first frequency range corresponds to a first frequency sub-band,
wherein a frequency band available to the second base station is divided into a plurality of frequency sub-bands, wherein the predefined sensing signal is transmitted from the second cell via a second frequency sub-band adjacent to the first frequency sub-band.

11. The method of any preceding claim, further comprising:
receiving, within the first cell, during a second radio resource block, a second received signal comprising a data signal transmitted within the first cell and an interfering signal, wherein the interfering signal comprises the predefined sensing signal transmitted from the second cell and the channel impulse response; and
removing the interfering signal from the second received signal, based on the predefined sensing signal and the determined channel impulse response.

12. The method of claim 11, further comprising:
reevaluating the channel impulse response; and
removing an interfering signal from one or more subsequent received signals based on the predefined sensing signal and the reevaluated channel impulse response.

13. The method of claim 12, wherein either:
the channel impulse response is reevaluated periodically; or
the channel impulse response is reevaluated in response to a determination that the channel has changed.

14. A base station configured to perform the method of any preceding claim.

15. A computer program comprising instructions that, when executed by a processor, cause the processor to perform the method of any of claims 1 to 13.
